(19) Europäisches Patentamt
European Patent Office
Office européen des brevets

(11) **EP 2 566 213 A1**

(12) **EUROPEAN PATENT APPLICATION**
published in accordance with Art. 153(4) EPC

(43) Date of publication:
06.03.2013 Bulletin 2013/10

(51) Int Cl.:
*H04W 16/16* (2009.01)   *H04W 16/32* (2009.01)
*H04W 72/12* (2009.01)

(21) Application number: 11775115.6

(22) Date of filing: 28.04.2011

(86) International application number:
PCT/JP2011/060379

(87) International publication number:
WO 2011/136334 (03.11.2011 Gazette 2011/44)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 30.04.2010 JP 2010105941

(71) Applicant: NTT DOCOMO, INC.
Chiyoda-ku
Tokyo 100-6150 (JP)

(72) Inventors:
• ABE, Tetsushi
Tokyo 100-6150 (JP)

• MIKI, Nobuhiko
Tokyo 100-6150 (JP)
• NAGATA, Satoshi
Tokyo 100-6150 (JP)
• OKUBO, Naoto
Tokyo 100-6150 (JP)
• JATURONG, Sangiamwong
Tokyo 100-6150 (JP)

(74) Representative: HOFFMANN EITLE
Patent- und Rechtsanwälte
Arabellastrasse 4
81925 München (DE)

(54) **BASE STATION APPARATUS, MOBILE TERMINAL APPARATUS AND COMMUNICATION CONTROL METHOD**

(57)    A base station apparatus, a mobile terminal apparatus and a communication control method are provided which can perform control adaptable to interference in a heterogeneous network and support next-generation mobile communication systems. The present invention adopts a configuration identifying, when received power of a transmission signal from a base station apparatus (B1) in a pico cell (C1) to a mobile terminal apparatus (UE) plus an offset becomes greater than received power of a transmission signal from a base station apparatus (B2) in a macro cell (C2) to the mobile terminal apparatus (UE), a mobile terminal apparatus (UE) whose received power of a transmission signal from the base station apparatus (B2) to the mobile terminal apparatus (UE) is greater than received power of a transmission signal to the mobile terminal apparatus (UE) from among mobile terminal apparatuses (UE) belonging to the pico cell (C1), and performing scheduling for the mobile terminal apparatus in correspondence with blank resources set in a downlink radio frame of the base station apparatus (B2).

FIG. 13

**Description**

TECHNICAL FIELD

The present invention relates to a base station apparatus, a mobile terminal apparatus and a communication control method in a next-generation mobile communication system.

BACKGROUND ART

In UMTS (Universal Mobile Telecommunications System) networks, attempts are made to adopt HSDPA (High Speed Downlink Packet Access) or HSUPA (High Speed Uplink Packet Access) for the purpose of improving frequency utilization efficiency and a data rate to thereby make the most of features of W-CDMA (Wideband Code Division Multiple Access)-based systems. Regarding this UMTS network, Long Term Evolution (LTE) is being studied aiming at a higher data rate and delay reduction or the like (Non-Patent Literature 1). Unlike W-CDMA, LTE uses OFDMA (Orthogonal Frequency Division Multiple Access) for downlinks and uses SC-FDMA (Single Carrier Frequency Division Multiple Access) for uplinks, as a multiplexing scheme.

Third-generation systems can generally realize a transmission rate of a maximum of the order of 2 Mbps on a downlink using a fixed band of 5 MHz. On the other hand, LTE systems can realize a transmission rate of a maximum of 300 Mbps on a downlink and on the order of 75 Mbps on an uplink using a variable band of 1.4 MHz to 20 MHz. Furthermore, for UMTS networks, studies are also being carried out on a system as the successor to LTE for the purpose of achieving a wider band and higher rate (e.g., LTE Advanced (LTE-A)).

In LTE-A (LTE Release 10), a heterogeneous network configuration is being studied which attaches importance to a local area environment as well as a conventional cellular environment. The heterogeneous network is a hierarchical network including a large-scale cell and a small-scale cell overlaying each other. Regarding the heterogeneous network, studies are being carried out on improvement of the throughput of the entire system by adopting range expansion whereby the range of the small-scale cell is widened so that more mobile terminal apparatuses are connected to the small-scale cell.

CITATION LIST

NON-PATENT LITERATURE

Non-Patent Literature 1: 3GPP, TR25.912 (V7.1.0), "Feasibility study for Evolved UTRA and UTRAN", Sept. 2006

SUMMARY OF THE INVENTION

TECHNICAL PROBLEM

The present invention has been implemented in view of the above problems, and it is an object of the present invention to provide a base station apparatus, a mobile terminal apparatus and a communication control method supporting next-generation mobile communication systems and capable of performing control adaptable to interference in a heterogeneous network.

SOLUTION TO PROBLEM

A base station apparatus according to the present invention is a base station apparatus that shares at least part of a frequency band with another base station apparatus covering a large-scale cell and covers a small-scale cell, including: an identification section configured to identify, when received power of a transmission signal to a mobile terminal apparatus plus an offset becomes greater than received power of a transmission signal from the other base station apparatus to the mobile terminal apparatus, the mobile terminal apparatus that has greater received power of the transmission signal from the other base station apparatus to the mobile terminal apparatus than the received power of the transmission signal to the mobile terminal apparatus from among mobile terminal apparatuses belonging to the own cell; and a scheduling section configured to perform scheduling for the mobile terminal apparatus identified by the identification section in correspondence with blank resources set in a downlink radio frame of the other base station apparatus.

TECHNICAL ADVANTAGE OF THE INVENTION

According to the present invention, it is possible to reduce, through range expansion, interference from a large-scale cell withamobile terminal apparatus connected to a base station apparatus in a small-scale cell. The present invention thus allows the base station apparatus and the mobile terminal apparatus in the small-scale cell to perform control adaptable to interference in a heterogeneous network including the large-scale cell and the small-scale cell.

BRIEF DESCRIPTION OF THE DRAWINGS

FIG.1 is a diagram illustrating a system band of an LTE system;
FIG.2 is a diagram illustrating an overview of a heterogeneous network;
FIG.3 is a diagram illustrating range expansion;
FIG.4 is a diagram illustrating interference from a macro cell during range expansion;
FIG.5 is a diagram illustrating an example of transmission control processing in a base station apparatus in a pico cell;
FIG.6 is a diagram illustrating a method of identifying a range-expanded mobile terminal apparatus;
FIG.7 is a diagram illustrating an example of transmission control processing in the base station apparatus in the pico cell;
FIG.8 is a diagram illustrating a configuration of a radio communication system;
FIG.9 is a diagram illustrating an overall configuration of a base station apparatus;
FIG.10 is a diagram illustrating an overall configuration of amobile terminal apparatus;
FIG.11 is a diagram illustrating function blocks for reporting a connection through range expansion of the mobile terminal apparatus to the base station apparatus in the pico cell;
FIG.12 is a diagram illustrating function blocks for scheduling processing in the base station apparatus in the pico cell; and
FIG.13 is a diagram illustrating a flow of communication control in a radio communication system.

DESCRIPTION OF EMBODIMENTS

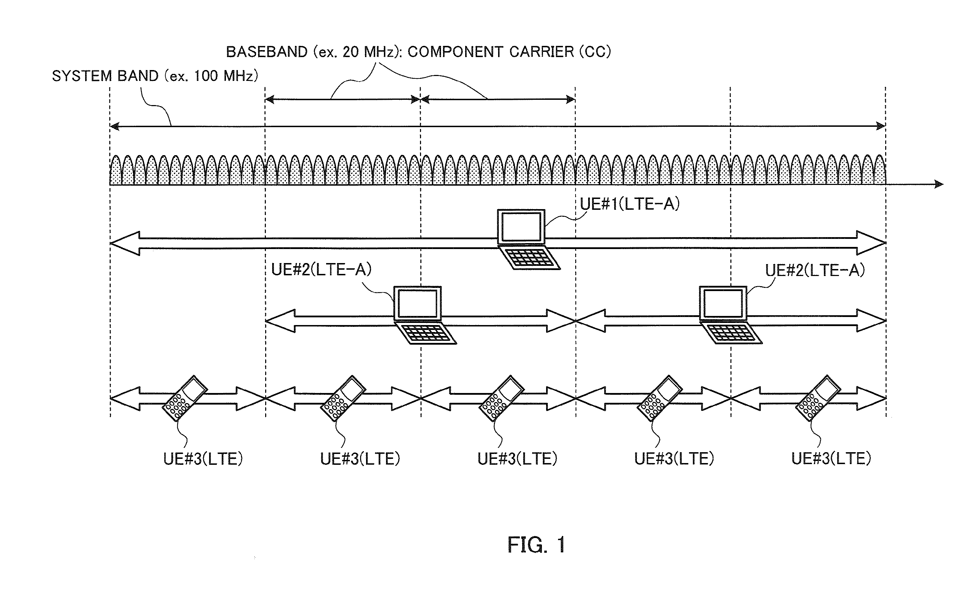

FIG. 1 is a diagram illustrating frequency utilization during mobile communication on a downlink. In the following description, fundamental frequency blocks will be described as component carriers. Furthermore, components having identical functions among all drawings illustrating an embodiment will be assigned identical reference numerals and overlapping descriptions thereof will be omitted.

The example shown in FIG.1 is a situation of frequency utilization in which an LTE-A system that is a first communication system having a relatively wide first system band comprised of a plurality of component carriers coexists with an LTE system that is a second communication system having a relatively narrow second system band (here, comprised of one component carrier). The LTE-A system performs radio communication using a variable system bandwidth of 100 MHz or below and the LTE system performs radio communication using a variable system bandwidth of 20 MHz or below. The system band of the LTE-A system is comprised of at least one fundamental frequency region (component carrier: CC) which uses the system band of the LTE system as one unit. Thus, aggregating a plurality of fundamental frequency regions into a wider band is called "carrier aggregation."

For example, in FIG.1, the system band of the LTE-A system is a system band (20 MHz X 5=100 MHz) including a band of five component carriers using the system band of the LTE system (baseband: 20 MHz) as one component carrier. In FIG.1, a mobile terminal apparatus UE (User Equipment) #1 is a mobile terminal apparatus supporting the LTE-A system (also supporting the LTE system) having a system band of 100 MHz, a UE#2 is a mobile terminal apparatus supporting the LTE-A system (also supporting the LTE system) having a system band of 40 MHz (20 MHz×2=40 MHz), and a UE#3 is a mobile terminal apparatus supporting the LTE system (but not supporting the LTE-A system) having a system band of 20 MHz (baseband).

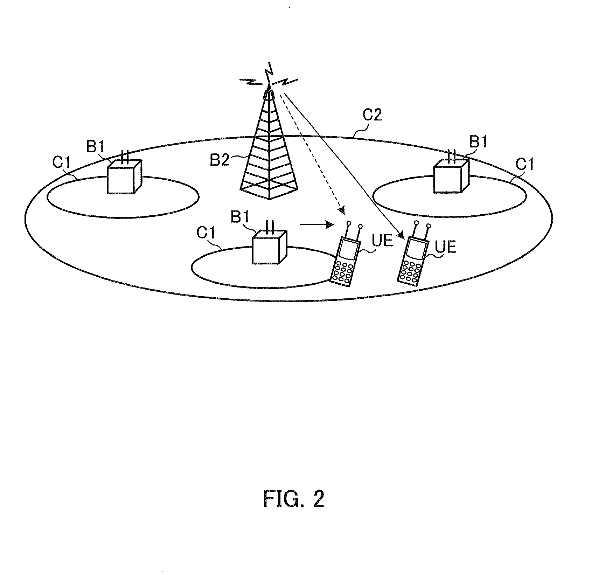

By the way, studies are being carried out on a heterogeneous network (hereinafter referred to as "HetNet") for the LTE-A system which attaches importance to a local area environment. As shown in FIG.2, HetNet is a hierarchical network that overlays, in addition to a conventional macro cell C2 (large-scale cell), cells in various modes such as pico cells C1 and femto cells (small-scale cells). In this HetNet, greater downlink transmission power is set for a base station apparatus B2 in the macro cell C2 that covers a relatively wide area than a base station apparatus B1 in the pico cell C1 that covers a relatively narrow area.

Improving the throughput of the entire system of HetNet requires a plurality of mobile terminal apparatuses UE not to be concentrated within the macro cell C2 but to be distributed to the pico cells C1 spotted within the macro cell C2. In this case, range expansion is used to expand the range of the pico cell C1 by adding an offset to received power (RSRP: Reference Signal Received Power) from the base station apparatus B1 in the pico cell C1. This range expansion is expected to cause many mobile terminal apparatuses UE to select pico cells C1 and thereby improve the throughput of the entire system.

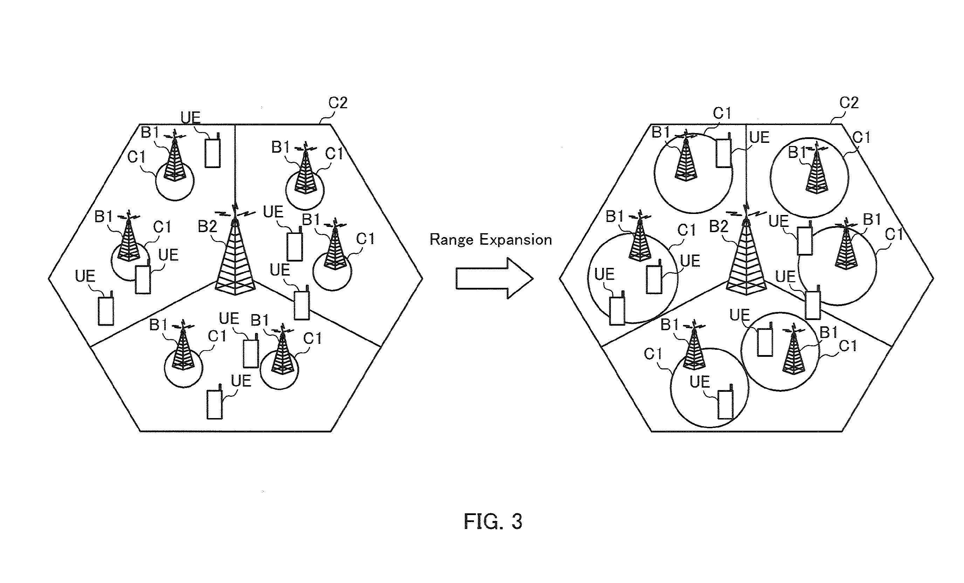

To be more specific, as shown on the left side of the sheet in FIG.3, the base station apparatus B2 in the macro cell C2 causes the mobile terminal apparatuses UE in the own cell to report an offset of received power. In this case, in response to this, the mobile terminal apparatus UE compares received power in the pico cell C1 with that in the macro cell C2 according to equation (1) below.

$$\text{RSRP\_other cell} + \text{offset} > \text{RSRP\_serving cell} \cdots (1)$$

When the mobile terminal apparatus UE is connected to the base station apparatus B2, RSRP_other cell represents received power in the pico cell C1 and RSRP_serving cell represents received power in macro cell C2.

When the received power in the pico cell C1 plus an offset is greater than the received power in the macro cell C2, the mobile terminal apparatus UE reports this information to the base station apparatus B2 in the macro cell C2. As shown on the right side of the sheet in FIG. 3, a mobile terminal apparatus UE that satisfies equation (1) performs handover from the macro cell C2 to the pico cell C1.

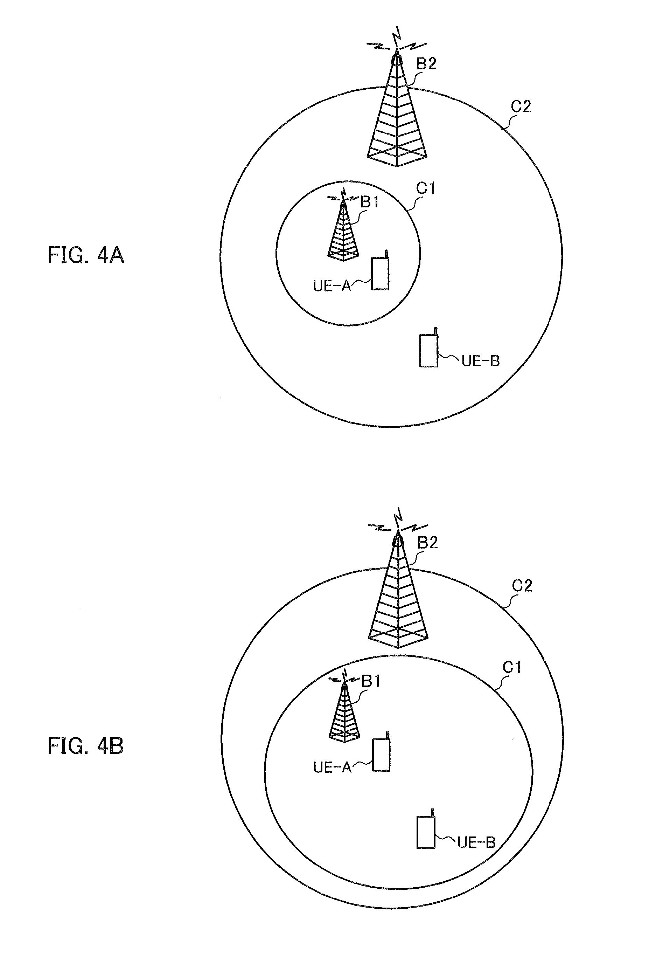

However, the mobile terminal apparatus UE that has performed handover to the pico cell C1 through range expansion has a problem that it receives strong interference from the macro cell C2 that shares part of its frequency band with the pico cell C1. For example, as shown in FIG.4A, if range expansion is not applied, each mobile terminal apparatus UE-AorUE-B selects a cell according to the magnitude of received power in the pico cell C1 or macro cell C2. The mobile terminal apparatus UE-A near the base station apparatus B1 selects the pico cell C1 and the mobile terminal apparatus UE-B located slightly far from the base station apparatus B1 selects the macro cell C2.

On the other hand, as shown in FIG. 4B, when range expansion is applied, each mobile terminal apparatus UE-A or UE-B selects a cell according to equation (1) as described above. In this case, the range of the pico cell C1 is expanded by an amount corresponding to the offset added to the received power. For this reason, not only the mobile terminal apparatus UE-A but also the mobile terminal apparatus UE-B located slightly far from the base station apparatus B1 selects the pico cell C1. In this case, since the received power in the pico cell C1 is greater than that in the macro cell C2, even when the mobile terminal apparatus UE-A selects the pico cell C1, interference from the macro cell C2 poses no problem. On the other hand, although the received power in the pico cell C1 is smaller than that in the macro cell C2, the mobile terminal apparatus UE-B selects the pico cell C1, and therefore the mobile terminal apparatus UE-B receives strong interference from the macro cell C2.

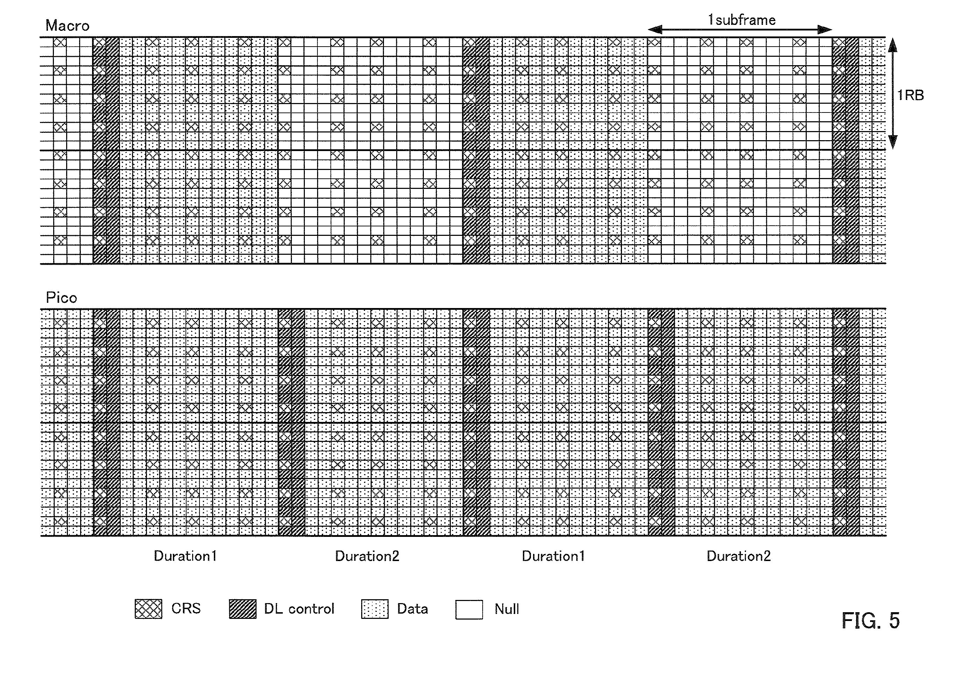

In order to solve the above problem, as shown in FIG.5, blank periods (blank resources) may be provided every other subframe in a downlink radio frame of the macro cell C2. This configuration suppresses interference from the macro cell C2 with the downlink radio frame of the pico cell C1 for subframes (Duration 2) corresponding to blank periods of the macro cell C2. This improves throughput of the mobile terminal apparatus UE-B for subframes represented by Duration 2.

However, in the downlink radio frame of the pico cell C1, subframes (Duration 1) that do not correspond to blank periods of the macro cell C2 are affected by interference from the macro cell C2. For this reason, the throughput of the mobile terminal apparatus UE-B deteriorates in subframes represented by Duration 1. On the other hand, interference from the macro cell C2 poses no problem for the mobile terminal apparatus UE-A and its throughput is never affected regardless of the presence or absence of blank periods of the macro cell C2.

Hence, the present inventor et al. came up with the present invention to solve the above problems. That is, an essence of the present invention is to cause a base station apparatus in a pico cell to identify a mobile terminal apparatus that selects the pico cell through range expansion and allocate user data to the identified mobile terminal apparatus while avoiding resources affected by interference from the macro cell. Such a configuration allows the base station apparatus in the pico cell to perform scheduling using both Durations 1 and 2 for the mobile terminal apparatus that selects the pico cell without range expansion and perform scheduling using Duration 2 for the mobile terminal apparatus that selects the pico cell through range expansion.

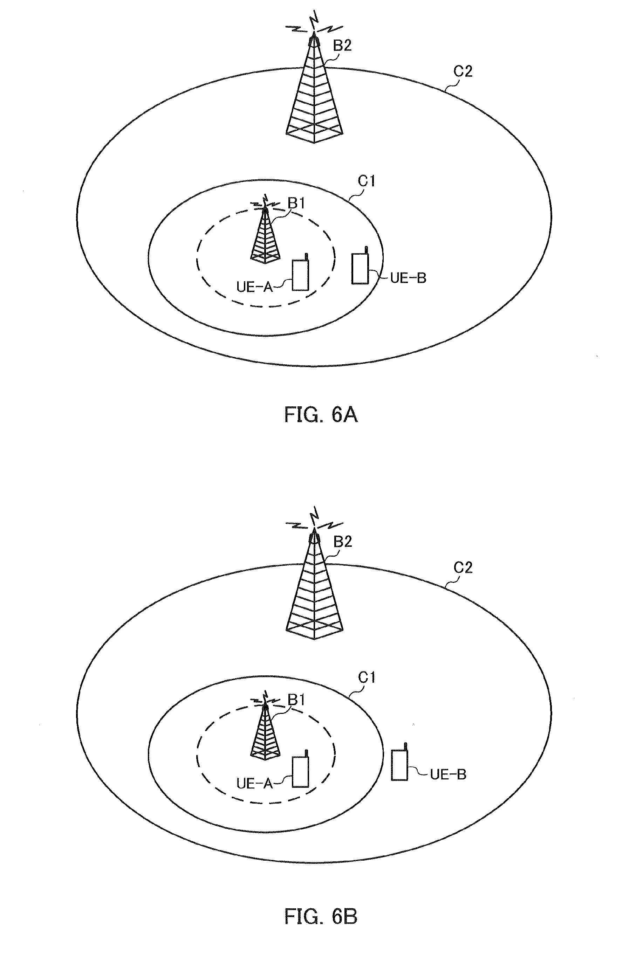

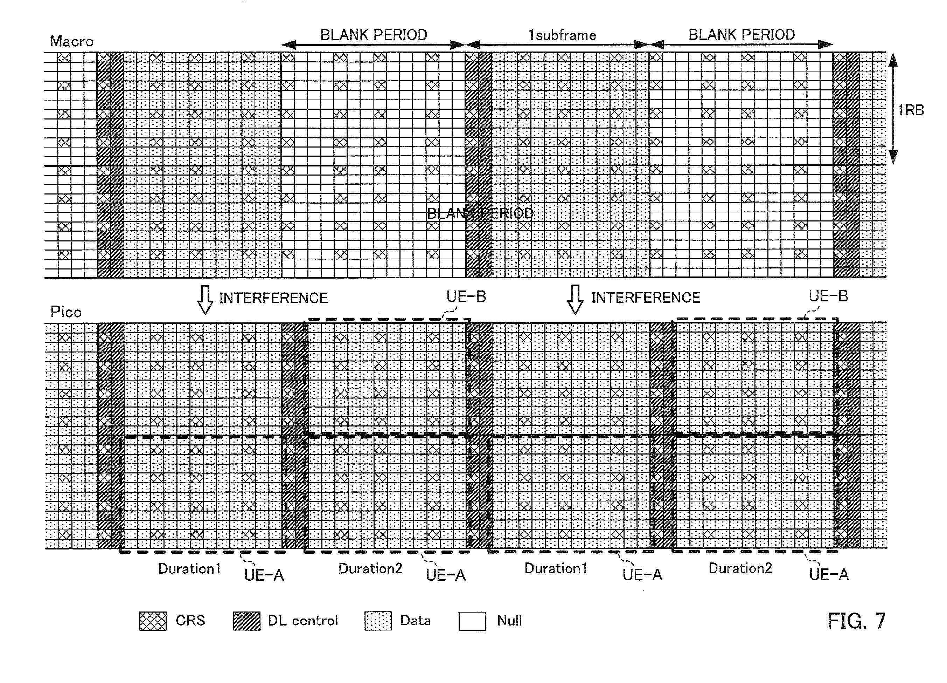

Hereinafter, embodiments of the present invention will be described in detail with reference to the accompanying drawings. Suppression of interference with a downlink radio frame of a pico cell through transmission control in a base station apparatus in the pico cell will be described with reference to FIG. 6 and FIG.7. FIG. 6 is a diagram illustrating a method of identifying a range-expanded mobile terminal apparatus by the base station apparatus in the pico cell according to an embodiment of the present invention. FIG.7 is a diagram illustrating an example of transmission control processing in the base station apparatus in the pico cell according to the present embodiment. In FIG.6, an area shown by a dotted line represents a pico cell range to which range expansion is not applied.

As shown in FIG.6A, a mobile terminal apparatus UE-A and a mobile terminal apparatus UE-B belong to a range-expandedpico cell C1. The mobile terminal apparatus UE-A is connected to a base station apparatus B1 in the pico cell C1 without range expansion and the mobile terminal apparatus UE-B is connected to the base station apparatus B1 in the pico cell C1 through range expansion. In this state, of the mobile terminal apparatuses UE-A and UE-B belonging to the own cell, the base station apparatus B1 identifies the mobile terminal apparatus UE-B connected through range expansion. In this case, the base station apparatus B1 reports, to the respective mobile terminal apparatuses UE-A and UE-B, two types of offset; one for identification of a mobile terminal apparatus UE and the other for handover.

Eachof the mobile terminal apparatuses UE-A and UE-B decides whether received power of the macro cell C2 is greater than that of the pico cell C1 using an expression used for handover measurement as shown in equation (2).

$$RSRP\_other\ cell > RSRP\_serving\ cell + offset \cdots (2)$$

Since each mobile terminal apparatus UE belongs to the pico cell C1, RSRP_other cell represents received power in the macro cell C2 and RSRP_serving cell represents received power in the pico cell C1. The offset is set to 0 when used to identify a mobile terminal apparatus and set to a value greater than 0 when used for handover. Although equation (2) is described as offset = 0 when used to identify a mobile terminal apparatus, the offset may be set to a degree of value that will not affect identification of a mobile terminal apparatus.

Using the offset for identification of a mobile terminal apparatus UE, the mobile terminal apparatus UE decides whether or not it is connected through range expansion. In this case, each mobile terminal apparatus UE compares received power in the macro cell C2 with received power in the pico cell C1 assuming that there is no offset (offset = 0). When the received power in the macro cell C2 is greater than the received power in the pico cell C1, each mobile terminal apparatus UE reports the fact that equation (2) is true to the base station apparatus B1 in the pico cell C1. In this case, equation (2) becomes false for the mobile terminal apparatus UE-A and equation (2) becomes true for the mobile terminal apparatus UE-B. The base station apparatus B1 identifies the mobile terminal apparatus UE-B connected through range expansion based on the report from each mobile terminal apparatus UE. Instead of the fact that equation (2) becomes true, each mobile terminal apparatus UE may report a received power difference between the macro cell C2 and the pico cell C1 to the base station apparatus B1. The decision on whether or not each mobile terminal apparatus UE is connected through range expansion may also be made when the decision on handover, which will be described later, results in "false."

The mobile terminal apparatus UE decides on handover using an offset for handover. In this case, each mobile terminal apparatus UE assumes that an offset is present (offset > 0) and compares the received power in the macro cell C2 with the received power in the pico cell C1 plus the offset. When the received power in the macro cell C2 is greater than the received power plus the offset in the pico cell C1, each mobile terminal apparatus UE-A, UE-B reports the fact that equation (2) is true to the base station apparatus B1 in the pico cell C1. In this case, as shown in FIG.6B, equation (2) becomes true for the mobile terminal apparatus UE-B, and the mobile terminal apparatus UE-B performs handover from the pico cell C1 to the macro cell C2. A decision on handover may also be made when a decision on whether or not each mobile terminal apparatus is connected through range expansion results in "true."

Thus, each mobile terminal apparatus UE-A, UE-B decides whether or not each mobile terminal apparatus is connected through range expansion or whether or not to perform handover based on two types of offset reported from the base station apparatus B1 in the pico cell C1. Although RSRP is used as received power in the above example, RS-SIR (Reference Signal Signal-to-Interference Ratio), RSSI (Received Signal Strength Indicator), RSRQ (Reference Signal Received Quality) or the like may also be used.

Upon identifying the mobile terminal apparatus UE-B connected through range expansion, the base station apparatus B1 in the pico cell C1 schedules downlink radio resources so that the mobile terminal apparatus UE-B may avoid interference from the macro cell C2. As shown in FIG. 7, the downlink radio frame of the macro cell C2 is provided with blank periods every other subframe. This blank period is a period during which interference of the pico cell C1 with the downlink radio frame is suppressed, and blank resources are set except CRSs (Common Reference Signals). The blank period is not limited to the configuration in which it is set every other subframe of the downlink radio frame, but maybe changed as appropriate.

Furthermore, in the downlink radio frame of the pico cell C1, subframes shown as Duration 2 correspond to blank periods of the downlink radio frame of the macro cell C2. For this reason, the base station apparatus B1 in the pico cell C1 performs scheduling on the mobile terminal apparatus UE-B connected through range expansion for Duration 2 corresponding to the blank periods. On the other hand, for the mobile terminal apparatus UE-A, the base station apparatus B1 performs scheduling for Durations 1 and 2 assuming that there is no problem with interference from the macro cell C2. In this case, the scheduler of the base station apparatus B1 allocates user data to each mobile terminal apparatus UE in resource block units in each subframe. This configuration suppresses interference from the macro cell C2 with the mobile terminal apparatus UE-B.

The present embodiment shows an example where the base station apparatus B2 in the macro cell C2 sets all frequency blocks of blank periods to blank resources, but the present invention is not limited to this configuration. A configuration may also be adopted in which the base station apparatus B2 sets some frequency blocks of the blank periods to blank resources. Furthermore, blank resources may be resources to which no data is allocated or may be defined as resources to which data is allocated to such an extent that radio frames in the pico cell are not affected by interference. Furthermore, blank resources may be defined as a resource transmitted with a degree of transmission power that radio frames in the pico cell are not affected by interference. Furthermore, the blank period is not limited to the configuration in which it is set every other subframe in the downlink radio frame, but may be changed as appropriate.

Furthermore, blank resources may be reported by the base station apparatus B2 in the macro cell C2 to the base station apparatus B1 in the pico cell C1, and if blank resources are defined fixedly between the base station apparatuses B1 and B2, they need not be reported. Furthermore, the base station apparatus B1 may also be configured so as to adjust transmission timing after receiving signaling from the base station apparatus B2 or vice versa. Furthermore, the base station apparatus B2 in the macro cell C2 may be configured to set blank periods when the number of peripheral pico cells C1 is equal to or more than a predetermined number or according to the number of connected mobile terminal apparatuses UE.

Furthermore, the base station apparatus B1 in the pico cell C1 may also be configured to report subframes affected by interference from the macro cell C2 to the mobile terminal apparatus UE-B connected through range expansion. This configuration allows the mobile terminal apparatus UE-B to demodulate user data while avoiding subframes of the pico cell C1 not corresponding to the blank period of the macro cell C2.

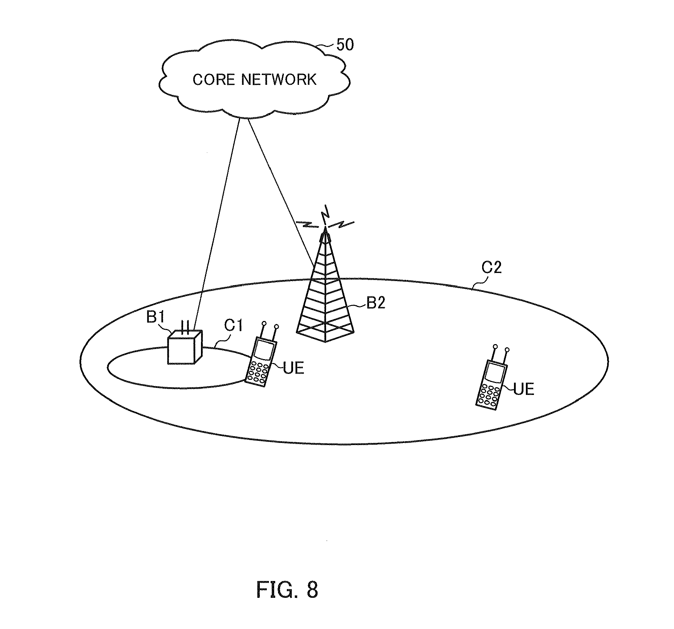

Here, a radio communication system according to the embodiment of the present invention will be described in detail. FIG.8 is a diagram illustrating a system configuration of the radio communication system according to the present embodiment. The radio communication system shown in FIG.8 is, for example, an LTE system or a system including SUPER 3G. This radio communication system may also be called "IMT-Advanced" or "4G. "

As shown in FIG. 8, the radio communication system is a HetNet where a hierarchical network is constructed of a first system having a macro cell C2 and a second system having a pico cell C1. The first system is configured by including a base station apparatus B2 that covers the macro cell C2 and a mobile terminal apparatus UE (only one UE is shown) that communicates with the base station apparatus B2. The second system is configured by including a base station apparatus B1 that covers the pico cell C1 and a mobile terminal apparatus UE (only one UE is shown) that communicates with the base station apparatus B1. The base station apparatuses B1 and B2 are allocated radio resources by a scheduler in resource block units for each user. Furthermore, the base station apparatuses B1 and B2 are connected to a higher station apparatus (not shown) respectively and connected to a core network 50 via the higher station apparatus. For convenience of description, a description will be given assuming that it is a mobile terminal apparatus that wirelessly communicates with the base station apparatus B1 or B2, but more generally, it may be a user apparatus (UE: User Equipment) including both a mobile terminal apparatus and a fixed terminal apparatus.

As a radio access scheme in a radio communication system, OFDMA (orthogonal frequency division multiple access) is applied to a downlink and SC-FDMA (single carrier frequency division multiple access) is applied to an uplink. OFDMA is a multicarrier transmission scheme that divides a frequency band into a plurality of narrow frequency bands (subcarriers) and maps data to respective subcarriers to perform communication. SC-FDMA is a single carrier transmission scheme under which a system band is divided into bands made up of one or consecutive resource blocks per terminal and the plurality of terminals use different bands to reduce interference among the terminals.

Here, a communication channel in an LTE system will be described. Downlink communication channels include PDSCH as a downlink data channel shared among mobile terminal apparatuses and a downlink L1/L2 control channel (PDCCH, PCFICH, PHICH). PDSCH transmits user data and higher control information. PDCCH transmits scheduling information of PDSCH and PUSCH or the like. PCFICH (Physical Control Format Indicator Channel) transmits the number of OFDM symbols used for PDCCH. PHICH (Physical Hybrid-ARQ Indicator Channel) transmits ACK/NACK of HARQ (Hybrid Automatic Repeat reQuest) for PUSCH.

Uplink communication channels include PUSCH (Physical Uplink Shared Channel) as an uplink data channel shared among mobile terminal apparatuses and PUCCH (Physical Uplink Control Channel) which is an uplink control channel. PUSCH transmits user data and higher control information. Furthermore, PUCCH transmits downlink radio quality information (CQI: Channel Quality Indicator) and ACK/NACK or the like.

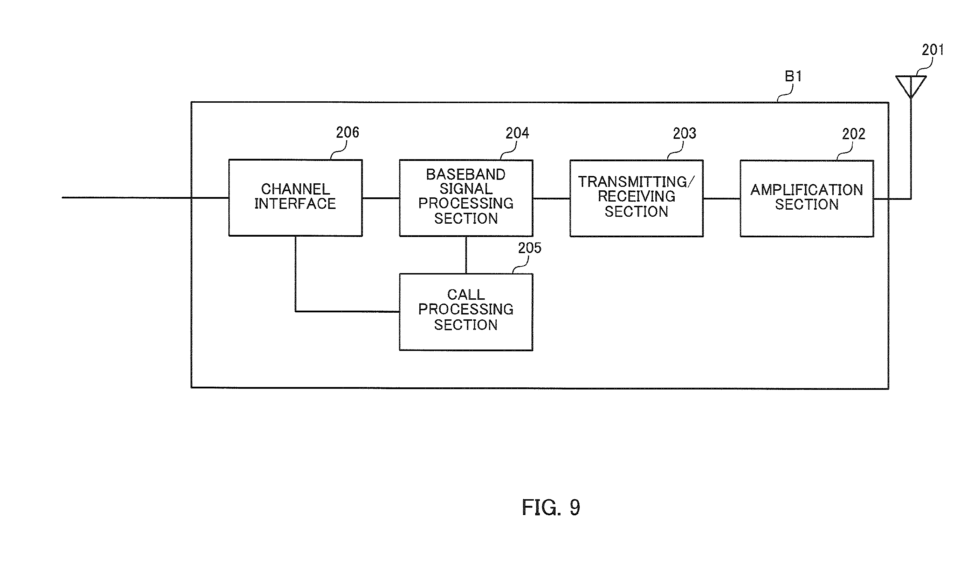

The overall configuration of the base station apparatus that covers the pico cell according to the present embodiment will be described with reference to FIG. 9. The base station apparatus that covers the macro cell has a configuration similar to the base station apparatus in the pico cell, and therefore description thereof will be omitted here. Furthermore, for convenience of description, description of the processing on a signal transmitted from the mobile terminal apparatus to the base station apparatus over an uplink will be omitted.

The base station apparatus B1 is provided with a transmitting/receiving antenna 201, an amplification section 202, a transmitting/receiving section 203, a baseband signal processing section 204, a call processing section 205, and a channel interface 206. User data transmitted from the base station apparatus B1 to the mobile terminal apparatus UE over a downlink is inputted to the baseband signal processing section 204 via the channel interface 206 from a higher station apparatus.

The baseband signal processing section 204 performs processing in a PDCP layer, segmentation and concatenation of user data, RLC (Radio Link Control) layer transmission processing such as transmission processing of RLC retransmission control, MAC (Medium Access Control) retransmission control such as HARQ transmission processing, scheduling, transmission format selection, channel coding, inverse fast Fourier transform (IFFT) processing and precoding processing on a downlink data channel signal. Furthermore, the baseband signal processing section 204 also performs transmission processing such as channel coding and inverse fast Fourier transform on a downlink control channel signal. Furthermore, the baseband signal processing section 204 reports, to each mobile terminal apparatus UE connected to the same cell C1 through a broadcast channel, control information for each mobile terminal apparatus UE to perform radio communication with the base station apparatus B1.

The transmitting/receiving section 203 frequency-converts the baseband signal outputted from the baseband signal processing section 204 to a radio frequency band. The amplification section 202 amplifies the frequency-converted transmission signal and outputs the signal to the transmitting/receiving antenna 201.

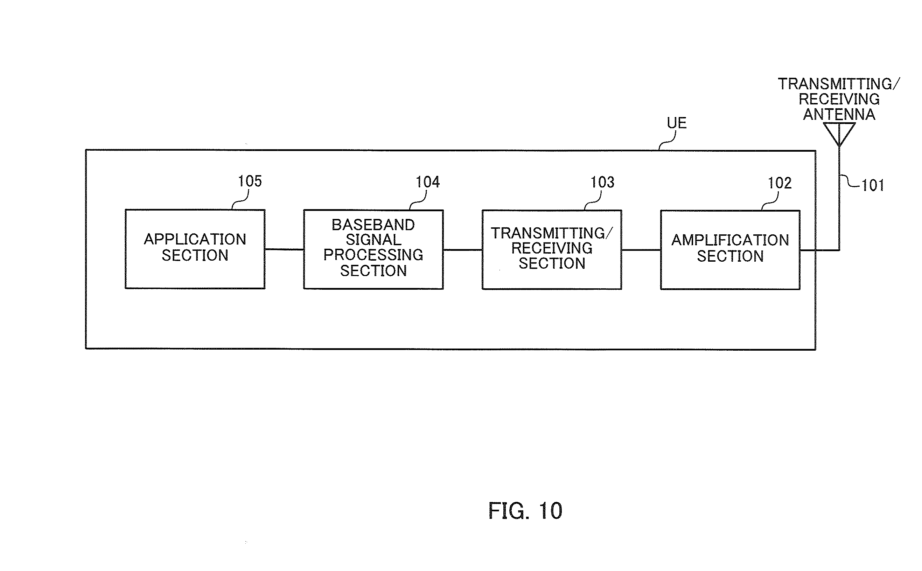

The overall configuration of the mobile terminal apparatus arranged on the pico cell according to the present embodiment will be described with reference to FIG.10. Since the mobile terminal apparatus arranged on the macro cell has a configuration similar to that of a mobile terminal apparatus inapico cell, descriptions thereof will be omitted. Furthermore, description of the processing on a signal transmitted from the mobile terminal apparatus to the base station apparatus over an uplink will be omitted for convenience of description.

The mobile terminal apparatus UE is provided with a transmitting/receiving antenna 101, an amplification section 102, a transmitting/receiving section 103, a baseband signal processing section 104 and an application section 105. Regarding downlink transmission data, a radio frequency signal received by the transmitting/receiving antenna 101 is amplified by the amplification section 102 and frequency-converted to a baseband signal in the transmitting/receiving section 103.

In the baseband signal processing section 104, this baseband signal is subjected to reception processing such as FFT processing, error correcting decoding, retransmission control. Of this downlink data, the downlink user data is transferred to the application section 105. The application section 105 performs processing on a layer higher than a phys ical layer or MAC layer. Furthermore, of the downlink data, broadcast information is also transferred to the application section 105.

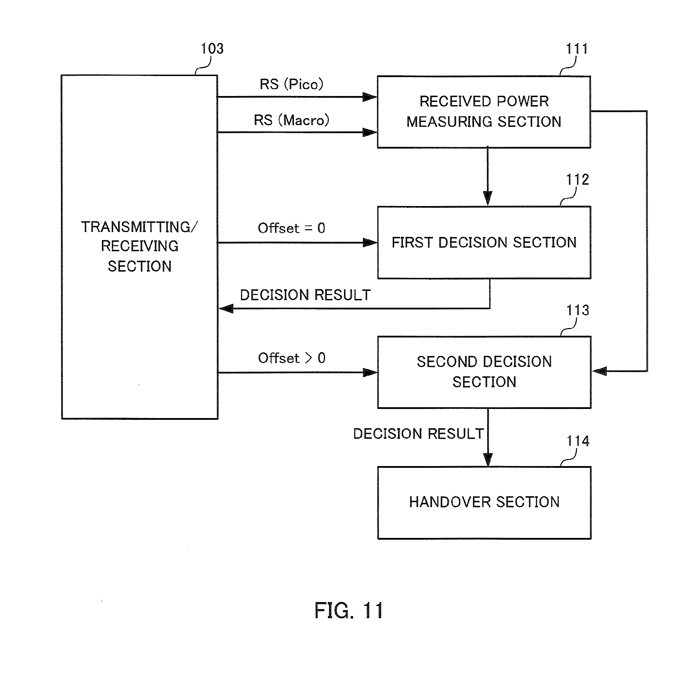

Function blocks for reporting a connection of the mobile terminal apparatus through range expansion to the base station apparatus in the pico cell will be described with reference to FIG.11. FIG.11 is a diagram illustrating function blocks for reporting a connection of the mobile terminal apparatus through range expansion to the base station apparatus in the pico cell. The function blocks in FIG.11 are mainly processing contents of the baseband processing section.

As shown in FIG.11, the mobile terminal apparatus UE is provided with a received power measuring section 111, a first decision section 112, a second decision section 113, a handover section 114 and a transmitting/receiving section 103. The received power measuring section 111 receives reference signals (RSs) from the base station apparatus B1 in the pico cell C1 or base station apparatus B2 in the macro cell C2 and measures their received power respectively. The first decision section 112 compares received power of the base station apparatuses B1 and B2 according to above equation (2) and decides whether or not each UE is connected through range expansion. In this case, the first decision section 112 sets offset = 0 reported from the base station apparatus B1 in "offset" in equation (2).

The first decision section 112 decides whether or not the received power in the macro cell C2 is greater than the received power in the pico cell C1. When the received power in the macro cell C2 is greater than the received power in the pico cell C1, the first decision section 112 reports the fact that equation (2) is true, that is, the UE is connected through range expansion to the base station apparatus B1. This decision result may be included in a control signal to be reported to the base station apparatus B1 through a control channel (PUCCH) or may be included in user data to be reported to the base station apparatus B1 through a data channel (PUSCH). The first decision section 112 maybe configured to make a decision when the second decision section 113 decides "false."

The second decision section 113 compares received power of the base station apparatuses B1 and B2 according to equation (2) and decides whether or not to perform handover. In this case, the second decision section 113 sets "offset > 0" reported from the base station apparatus B2 in the offset in equation (2). The second decision section 113 decides whether or not the received power in the macro cell C2 is greater than the received power in the pico cell C1 plus an offset. When the received power in the macro cell C2 is greater than the received power in the pico cell C1 plus an offset, the second decision section 113 outputs the fact that equation (2) is true, that is, that handover is performed to the handover section 114. The second decision section 113 may be configured to make a decision when the first decision section 112 decides "true."

When the decision result of the second decision section 113 is "true," the handover section 114 reports the information that handover will be performed from the pico cell C1 to the macro cell C2 to the base station apparatus B1 and performs handover. The transmitting/receiving section 103 performs transmission/reception processing on information transmitted/received between the mobile terminal apparatus UE and the base station apparatus B1.

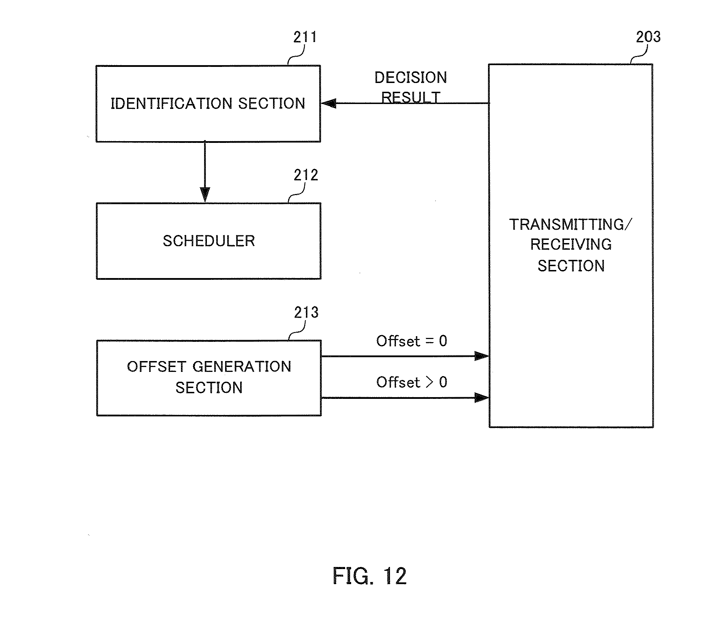

Function blocks for the scheduling processing in the base station apparatus in the pico cell will be described with reference to FIG.12. FIG.12 is a diagram illustrating function blocks for the scheduling processing in the base station apparatus in the pico cell. The respective function blocks in FIG.12 are mainly processing contents of the baseband processing section.

As shown in FIG.12, the base station apparatus B1 includes an identification section 211, a scheduler 212, an offset generation section 213 and a transmitting/receiving section 203. The identification section 211 identifies a mobile terminal apparatus UE connected through range expansion based on a decision result reported from each mobile terminal apparatus UE in the own cell. The scheduler 212 allocates radio resources to each user in resource block units. In this case, the scheduler 212 allocates user data to resource blocks corresponding to blank resources in a downlink radio frame of the macro cell C2 for the mobile terminal apparatus UE identified by the identification section 211.

The offset generation section 213 generates two types of offset; one for identification of the mobile terminal apparatus UE and the other for handover for each mobile terminal apparatus UE in the own cell. The offset for identification of the mobile terminal apparatus UE is set to 0 and the offset for handover is set to a value greater than 0. The base station apparatus B1 reports the two types of offset to the mobile terminal apparatus UE to thereby cause the mobile terminal apparatus UE to make two types of decision using handover measurement. The transmitting/receiving section 203 performs transmission/reception processing on the information transmitted/received between the base station apparatus B1 and the mobile terminal apparatus UE.

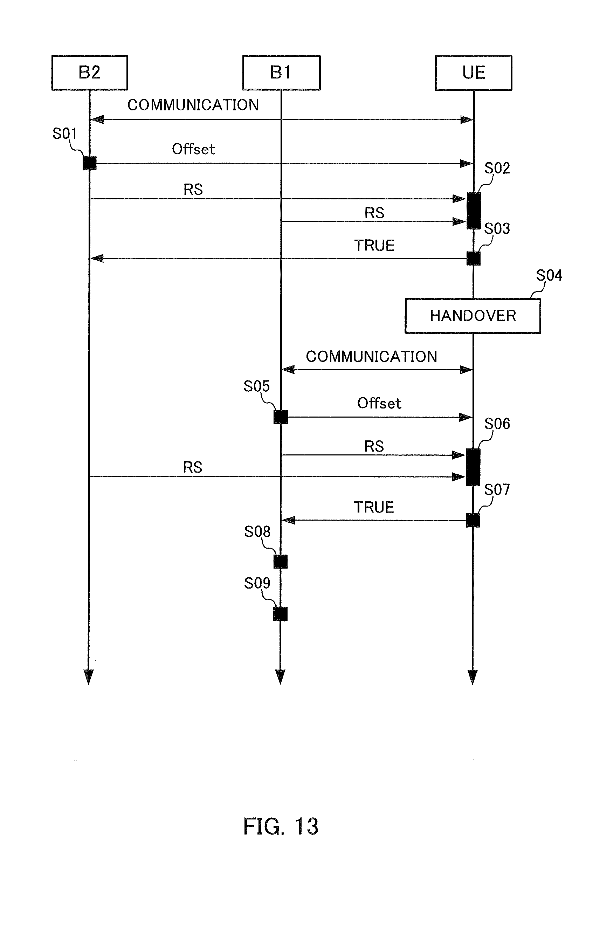

A flow of communication control in the radio communication system according to the present embodiment will be described with reference to FIG.13. FIG.13 is a diagram illustrating a flow of communication control in the radio communication system according to the present embodiment. In an initial state, suppose the mobile terminal apparatus is connected to the base station apparatus in the macro cell.

As shown in FIG.13, the base station apparatus B2 reports an offset to the mobile terminal apparatus UE in the own cell (in the macro cell C2) (step S01) . Next, the mobile terminal apparatus UE measures received power of reference signals received from the base station apparatus B2 in the macro cell C2 and the base station apparatus B1 in the pico cell C1, and compares the received power using above equation (1) (step S02) . When the received power in the pico cell C1 plus an offset is greater than the received power in the macro cell C2, the mobile terminal apparatus UE reports the decision result showing that equation (1) is true to the base station apparatus B2 (step S03).

The mobile terminal apparatus UE then performs handover from the macro cell C2 to the pico cell C1 (step S04). In this way, the range of the pico cell C1 is expanded by an amount of the received power in the pico cell C1 plus the offset and range expansion is performed. On the other hand, in step S02, when the received power in the pico cell C1 plus the offset is smaller than the received power in the macro cell C2, the mobile terminal apparatus UE does not perform handover but continues communication with the base station apparatus B2.

Next, the base station apparatus B1 reports an offset to the mobile terminal apparatus UE in the own cell (in the pico cell C1) (step S05). In this case, a specific offset of the mobile terminal apparatus UE is set to 0 and an offset for handover is set to a value greater than 0. Here, description of the processing on handover from the pico cell C1 to macro cell C2 is omitted for convenience of description. Next, the mobile terminal apparatus UE measures received power of reference signals received from the base station apparatus B1 in the pico cell C1 and the base station apparatus B2 in the macro cell C2, and compares the received power using above equation (2) (step S06).

When the received power of the macro cell C2 is greater than the received power of the pico cell C1, the mobile terminal apparatus UE reports the decision result showing that equation (2) is true to the base station apparatus B1 (step S07). Next, the base station apparatus B1 identifies the mobile terminal apparatus UE connected through range expansion from the decision result (step S08). That is, the base station apparatus B1 identifies that the mobile terminal apparatus UE belongs to the expanded range of the pico cell C1. Next, the base station apparatus B1 performs scheduling on radio resources corresponding to blank resources of the downlink transmission frame of the macro cell C2 (step S09).

On the other hand, when the received power of the macro cell C2 is smaller than the received power of the pico cell C1, the mobile terminal apparatus UE does not report the decision result to the base station apparatus B1. Thus, the base station apparatus B1 identifies the mobile terminal apparatus UE connected without range expansion. In this case, the base station apparatus B1 performs normal scheduling. Upon receiving a decision result showing that equation (2) is false from the mobile terminal apparatus UE, the base station apparatus B1 may identify the mobile terminal apparatus UE connected without range expansion.

As described above, according to the base station apparatus B1 according to the present embodiment, of mobile terminal apparatuses UE in the own cell (in the pico cell C1), it is possible to distinguish mobile terminal apparatuses UE connected through range expansion from mobile terminal apparatuses UE connected without range expansion. For this reason, the base station apparatus B1 can allocate user data to the mobile terminal apparatus UE located at a position affected by interference from the macro cell C2 while avoiding resources affected by interference from the macro cell C2. Furthermore, withsuchaconfiguration, the base station apparatus B1 can perform normal scheduling for the mobile terminal apparatus UE that selects the pico cell C1 without range expansion and perform scheduling with suppressed interference for the mobile terminal apparatus that selects the pico cell through range expansion.

A base station apparatus that covers a pico cell as a small-scale cell has been described in the above embodiment, but the present invention is not limited to this configuration. The base station apparatus may be any base station apparatus that covers the cell affected by interference from the macro cell and may be any small base station apparatus that covers a femto cell or micro cell or the like.

Furthermore, the above embodiment has described a configuration in which a base station apparatus in a pico cell reports an offset for identification of a range-expanded mobile terminal apparatus to a mobile terminal apparatus, but the present invention is not limited to this configuration. The base station apparatus in the pico cell may also have a configuration in which no offset for identification of the mobile terminal apparatus is reported to the mobile terminal apparatus. The mobile terminal apparatus sets 0 in "offset" in equation (2) beforehand and uses this for identification as to whether or not the mobile terminal apparatus is connected through range expansion.

Furthermore, in the above embodiment, adding an offset to received power in the pico cell may be interpreted as reducing the offset from the received power of the macro cell.

Furthermore, the above embodiment has described a configuration in which received power from base station apparatuses in a pico cell and a macro cell is measured to identify a mobile terminal apparatus connected through range expansion, but the present invention is not limited to this configuration. The base station apparatus in the pico cell may be configured to identify the mobile terminal apparatus connected through range expansion according to channel quality fed back from the mobile terminal apparatus.

When the channel quality fed back from the mobile terminal apparatus is equal to or below a predetermined threshold, the identification section of the base station apparatus in the pico cell may be configured to identify the mobile terminal apparatus connected through range expansion. In this case, the identification section may calculate an average value of channel quality for a certain time and compare this with a threshold. The predetermined threshold is set to a value with which it is possible to decide whether or not received power in the macro cell is greater than received power in the pico cell, for example, -5 dB to -10 dB. The predetermined threshold may also be set in consideration of errors such as noise. Furthermore, the mobile terminal apparatus may be configured to include a channel quality measuring section that measures channel quality of the pico cell and macro cell in addition to the received power measuring section.

The channel quality may be any indicator that indicates at least propagation quality such as CQI (Channel Quality Indicator).

The present invention is not limited to the above embodiment, but can be implemented modified in various ways. For example, the present invention may be implemented by modifying allocation of component carriers, the number of processing sections, processing procedure, the number of component carriers, the number of component carriers aggregated as appropriate without departing from the scope of the present invention. Other aspects may also be implemented modified as appropriate without departing from the scope of the present invention.

The present application is based on Japanese Patent Application No.2010-105941 filedonApril 30, 2010, entire content of which is expressly incorporated by reference herein.

**Claims**

1. A base station apparatus that shares at least part of a frequency band with another base station apparatus covering a large-scale cell and covers a small-scale cell, comprising:

   an identification section configured to identify, when received power of a transmission signal to a mobile terminal apparatus plus an offset becomes greater than received power of a transmission signal from the other base station apparatus to the mobile terminal apparatus, the mobile terminal apparatus that receives a greater amount of interference from the other base station apparatus from among mobile terminal apparatuses belonging to the own cell; and
   a scheduling section configured to perform scheduling for the mobile terminal apparatus identified by the identification section in correspondence with blank resources set in a downlink radio frame of the other base station apparatus.

2. The base station apparatus according to claim 1, wherein the identification section identifies a mobile terminal apparatus having greater received power of a transmission signal from the other base station apparatus to the mobile terminal apparatus than received power of a transmission signal to the mobile terminal apparatus from among mobile terminal apparatuses belonging to the own cell.

3. The base station apparatus according to claim 1 or claim 2, further comprising an offset generation section configured to generate an offset which is used for handover based on a comparison between received power of a transmission signal to a mobile terminal apparatus belonging to the own cell and received power of a transmission signal from the other base station apparatus to the mobile terminal apparatus and which is added to received power of a transmission signal to the mobile terminal apparatus belonging to the own cell.

4. The base station apparatus according to claim 3, wherein the offset generation section further generates an offset used to identify a mobile terminal apparatus belonging to the own cell, sets a value not affecting the magnitude of received power of the transmission signal to the mobile terminal apparatus and sets a value greater than the value of the offset used to identify the mobile terminal apparatus as the offset used for handover.

5. A mobile terminal apparatus that shares at least part of a frequency band with another base station apparatus covering a large-scale cell and can be connected to a base station apparatus that covers a small-scale cell, comprising a first decision section configured to decide, when received power of a transmission signal from the base station apparatus plus an offset becomes greater than received power of a transmission signal from the other base station apparatus, and the mobile terminal apparatus thereby belongs to the small-scale cell, whether or not the received power of the transmission signal from the other base station apparatus is greater than the received power of the transmission signal from the base station apparatus, wherein:

the decision result by the first decision section showing that the received power of the transmission signal from the other base station apparatus is greater than the received power of the transmission signal from the base station apparatus is reported to the base station apparatus to cause the base station apparatus to perform scheduling in correspondence with blank resources set in a downlink radio frame of the other base station apparatus.

6. The mobile terminal apparatus according to claim 5, further comprising a second decision section configured to decide, when the mobile terminal apparatus belongs to the small-scale cell, whether or not received power of the transmission signal from the base station apparatus plus an offset is greater than received power of the transmission signal from the other base station apparatus,
wherein the decision result by the second decision section showing that received power of the transmission signal from the base station apparatus plus an offset is smaller than received power of the transmission signal from the other base station apparatus is reported to the base station apparatus so as to perform handover from the small-scale cell to the large-scale cell.

7. The mobile terminal apparatus according to claim 6, wherein:

the first decision section makes a decision when the offset reported from the base station apparatus is set to 0, and the second decision section makes a decision when the offset reported from the base station apparatus is set to a value greater than 0.

8. A communication control method for a base station apparatus that shares at least part of a frequency band with another base station apparatus covering a large-scale cell and covers a small-scale cell, the method comprising:

a step of identifying, when received power of a transmission signal to a mobile terminal apparatus plus an offset becomes greater than received power of a transmission signal from the other base station apparatus to the mobile terminal apparatus, the mobile terminal apparatus that has greaterreceivedpowerof the transmission signal from the other base station apparatus to the mobile terminal apparatus than the received power of the transmission signal to the mobile terminal apparatus from among mobile terminal apparatuses belonging to the own cell; and
a step of performing scheduling for the mobile terminal apparatus identified by the identification section in correspondence with blank resources set in a downlink radio frame of the other base station apparatus.

9. A base station apparatus that shares at least part of a frequency band with another base station apparatus covering a large-scale cell and covers a small-scale cell, comprising:

an identification section configured to identify, when received power of a transmission signal to a mobile terminal apparatus plus an offset becomes greater than received power of a transmission signal from the other base station apparatus to the mobile terminal apparatus, a mobile terminal apparatus whose channel quality fed back from the mobile terminal apparatus is equal to or below a predetermined threshold, from among mobile terminal apparatuses belonging to the own cell; and

a scheduling section configured to perform scheduling for the mobile terminal apparatus identified by the identification section in correspondence with blank resources set in a downlink radio frame of the other base station apparatus.

10. The base station apparatus according to claim 9, wherein the channel quality is a CQI (Channel Quality Indicator).

FIG. 1

FIG. 2

FIG. 3

FIG. 4A

FIG. 4B

Macro

1 subframe

1RB

Pico

Duration1    Duration2    Duration1    Duration2

CRS    DL control    Data    Null

FIG. 5

EP 2 566 213 A1

FIG. 6A

FIG. 6B

1RB

BLANK PERIOD

1subframe

BLANK PERIOD

BLANK PERIOD

Macro

⇩ INTERFERENCE

UE-B

UE-B

⇩ INTERFERENCE

Pico

Duration1 UE-A | Duration2 UE-A | Duration1 UE-A | Duration2 UE-A

CRS | DL control | Data | Null

FIG. 7

FIG. 8

FIG. 9

EP 2 566 213 A1

FIG. 10

EP 2 566 213 A1

FIG. 11

EP 2 566 213 A1

```
                                              DECISION
                                              RESULT
┌─────────────────────┐              ┌──────────────────┐
│                     │◄─────────────│                  │
│ IDENTIFICATION      │211           │                  │203
│ SECTION             │              │                  │
└─────────────────────┘              │                  │
          │                          │                  │
          ▼                          │                  │
┌─────────────────────┐212           │  TRANSMITTING/   │
│                     │              │  RECEIVING       │
│    SCHEDULER        │              │  SECTION         │
│                     │              │                  │
└─────────────────────┘              │                  │
                                     │                  │
                                     │                  │
┌─────────────────────┐213  Offset = 0 │                  │
│                     │──────────────►│                  │
│ OFFSET GENERATION   │   Offset > 0 │                  │
│ SECTION             │──────────────►│                  │
└─────────────────────┘              └──────────────────┘
```

FIG. 12

FIG. 13

## INTERNATIONAL SEARCH REPORT

International application No.

PCT/JP2011/060379

A. CLASSIFICATION OF SUBJECT MATTER
*H04W16/16*(2009.01)i, *H04W16/32*(2009.01)i, *H04W72/12*(2009.01)i

According to International Patent Classification (IPC) or to both national classification and IPC

B. FIELDS SEARCHED

Minimum documentation searched (classification system followed by classification symbols)
H04W4/00-H04W99/00, H04B7/24-H04B7/26

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | Qualcomm Europe, Range expansion for efficient support of heterogeneous networks, 3GPP R1-083813, 3GPP, 2008.09.29 | 1-10 |
| Y | JP 2009-49661 A (NTT Docomo Inc.), 05 March 2009 (05.03.2009), paragraph [0034]; claim 1 & WO 2009/025240 A1 & EP 2180736 A1 | 1-10 |
| Y | JP 2010-45547 A (NTT Docomo Inc.), 25 February 2010 (25.02.2010), paragraph [0026] & WO 2010/018746 A1 | 1-10 |

☐ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 June, 2011 (01.06.11) | 14 June, 2011 (14.06.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010105941 A

**Non-patent literature cited in the description**

- Feasibility study for Evolved UTRA and UTRAN. *3GPP, TR25.912 (V7.1.0,* September 2006